# EUROPEAN PATENT SPECIFICATION

(11) **EP 3 181 460 B1**
(45) Date of publication and mention of the grant of the patent: **25.03.2020**
(21) Application number: 16201011.0
(22) Date of filing: 28.11.2016
(51) Int. Cl.: B64F 1/36, G06Q 50/28, G06Q 10/08, G08B 13/24

(54) **SYSTEMS AND METHODS OF TRACKING SMART LUGGAGE**
SYSTEM UND VERFAHREN ZUR VERFOLGUNG VON INTELLIGENTEM GEPÄCK
SYSTÈMES ET PROCÉDÉS DE SUIVI DES BAGAGES INTELLIGENTS

(30) Priority: 16.12.2015 US 201514970753
(43) Date of publication of application: 21.06.2017
(73) Proprietor: Honeywell International Inc., Morris Plains, NJ 07950 (US)
(72) Inventor: GAO, Yekun, Morris Plains, NJ 07950 (US); YU, Jie, Morris Plains, NJ 07950 (US); WANG, Yi, Morris Plains, NJ 07950 (US); JI, Xiaoxi, Morris Plains, NJ 07950 (US)
(74) Representative: Houghton, Mark Phillip

(56) References cited:
- WO-A1-2015/144210
- US-A1- 2006 097 046
- US-A1- 2007 222 587
- US-A1- 2013 241 712
- US-A1- 2014 139 334
- US-B1- 7 791 455

## Description

### FIELD

The present invention relates generally to systems and methods of tracking smart luggage. More particularly, the present invention relates to systems and methods of causing a tracking sensor system in smart luggage to exit a low power sleep state.

### BACKGROUND

Smart luggage is known in the art and is advantageously used to prevent lost luggage during travel. For example, known smart luggage includes one or more tracking sensor systems that can be used to identify the real-time GPS location of the luggage and communicate the identified location to a user's mobile device, such as a cellular phone or personal digital assistant.

When smart luggage is placed on an airplane or other aircraft, the tracking sensor system must be shut down or placed in a low power sleep state before the aircraft takes off so that the GPS capabilities of the tracking sensor system do not interfere with operation and communication of the aircraft. Then, when the aircraft lands, the tracking sensor system must be manually turned on or removed from the low power sleep state.

When the tracking sensor system is turned off or in the low power sleep state, the tracking sensor system cannot be used to identify the location of the luggage. Accordingly, even after the aircraft lands, there is a time interval during which it is impossible to track the luggage because the tracking sensor system has not yet been manually turned on or removed from the low power sleep state.

US2013241712 (A1) discloses methods and systems for GPS enabled baggage tags.

WO2015144210 (A1) discloses an electronic tag assembly with cellular communication module.

In view of the above, there is a continuing, ongoing need for improved systems and methods.

### SUMMARY OF THE INVENTION

The present invention provides for a method and corresponding system as claimed in the accompanying claims;

### BRIEF DESCRIPTION OF THE DRAWINGS

FIG. 1 is a block diagram of a system in accordance with disclosed embodiments;
FIG. 2 is a flow diagram of a method in accordance with disclosed embodiments; and
FIG. 3 is a flow diagram of a method in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods of tracking smart luggage. For example, some embodiments disclosed herein can include systems and methods of causing a tracking sensor system in smart luggage to exit a low power sleep state.

In accordance with disclosed embodiments, systems and methods disclosed herein can include an accelerator sensor system, for example, a 6-axis accelerator sensor system, that can remain on even when a tracking sensor system is off or in a low power sleep state. Indeed, the accelerator sensor system can remain out of a low power sleep state even when located on an aircraft in flight because the accelerator sensor system does not transmit or receive signals, such as GPS signals, that could interfere with the operation and communication of the aircraft.

In accordance with disclosed embodiments, the accelerator sensor system can identify when an associated piece of smart luggage has exited an aircraft and responsive thereto, can transmit a signal to the tracking sensor system to cause the tracking sensor system to turn on or exit a low power sleep state. In some embodiments, the accelerator sensor system can identify that the associated piece of smart luggage has exited an aircraft when the accelerated sensor system identifies that the luggage is moving along a baggage conveyer belt at an airport. Indeed, the curved shape of a baggage conveyer belt can be known, for example, a U-shaped curve or some other known curved shape. The accelerator sensor system can identify when it is traveling along a path with the known curved shape and responsive thereto, can send the signal to the tracking sensor system to cause the tracking sensor system to turn on or exit the low power sleep state.

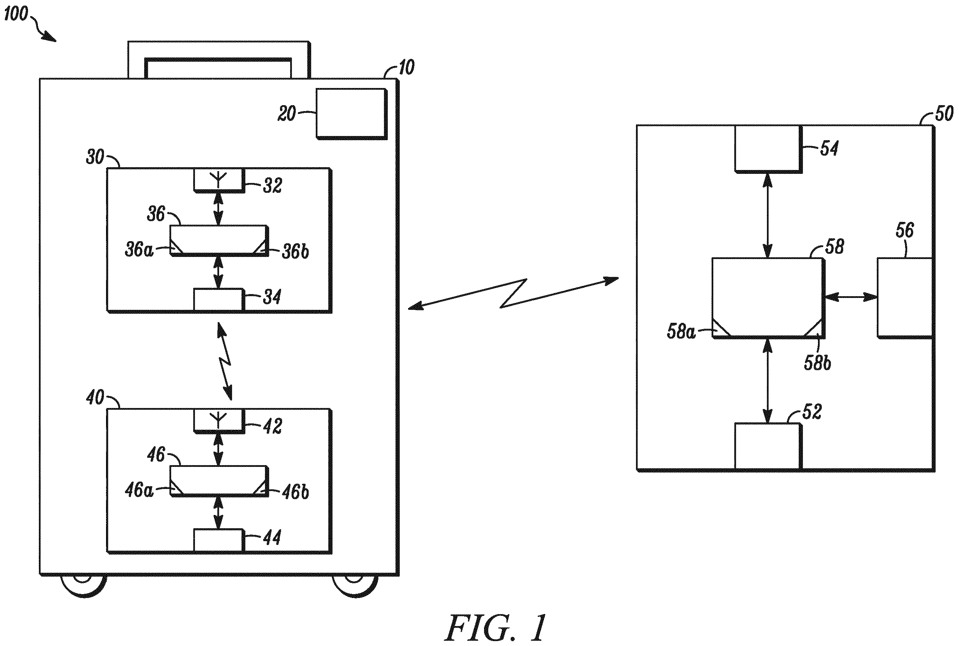

FIG. 1 is a block diagram of a system 100 in accordance with disclosed embodiments. As seen, the system 100 can include a piece of smart luggage 10 and a user's mobile device 50, for example, a cellular phone or other personal digital assistant. The smart luggage 10 can include a two-dimensional code 20, such as a QR code or other bar code, that can be affixed to an exterior surface of the luggage 10 and a tracking sensor system 30 and an accelerator sensor system 40, each of which can be located or housed in some interior portion of the luggage 10.

The tracking sensor system 30 can include a transceiver device 32, a sensing device 34, control circuitry 36, one or more programmable processors 36a, and executable control software 36b as would be understood by one of ordinary skill in the art. The executable control software 36b can be stored on a transitory or non-transitory computer readable medium, including, but not limited to, local computer memory, RAM, optical storage media, magnetic storage media, flash memory, and the like. In some embodiments, the control circuitry 36, programmable processor 36a, and executable control software 36b can execute and control some of the methods described above and herein.

The accelerator sensor system 40 can include a transceiver device 42, an accelerometer 44, for example, a 6-axis accelerometer, control circuitry 46, one or more programmable processors 46a, and executable control software 46b as would be understood by one of ordinary skill in the art. The executable control software 46b can also be stored on a transitory or non-transitory computer readable medium, including, but not limited to, local computer memory, RAM, optical storage media, magnetic storage media, flash memory, and the like. In some embodiments, the control circuitry 46, programmable processor 46a, and executable control software 46b can execute and control some of the methods described above and herein.

The mobile device 50 can include a scanning device 52, a transceiver device 54, a user interface device 56, control circuitry 58, one or more programmable processors 58a, and executable control software 58b as would be understood by one of ordinary skill in the art. The executable control software 58b can be stored on a transitory or non-transitory computer readable medium, including, but not limited to, local computer memory, RAM, optical storage media, magnetic storage media, flash memory, and the like. In some embodiments, the control circuitry 58, programmable processor 58a, and executable control software 58b can execute and control some of the methods described above and herein.

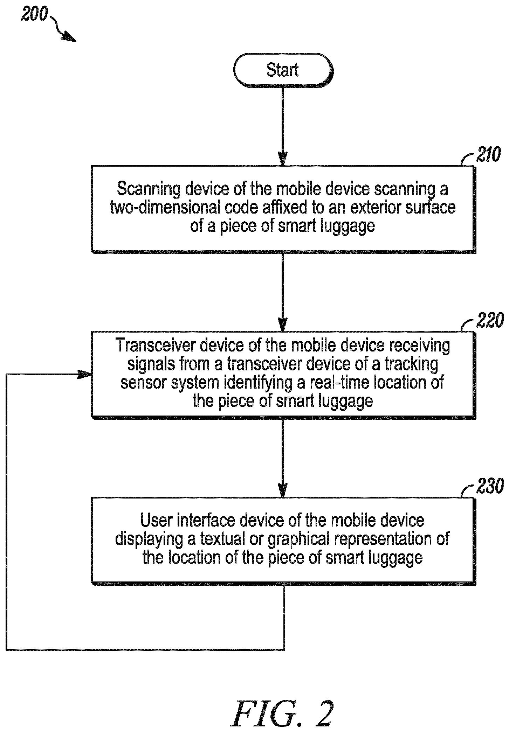

FIG. 2 is a flow diagram of a method 200 in accordance with disclosed embodiments. As seen in FIG. 2, the method 200 can include the scanning device 52 of the mobile device 50 scanning the code 20 on the luggage 10 to identify the luggage 10 and its associated tracking sensor system 30 to the mobile device 50 as in 210. Once identified thereto, the method 200 can include the transceiver device 54 of the mobile device 50 receiving one or more signals from the transceiver device 32 of the tracking sensor system 30 identifying the real-time location of the associated luggage 10 as in 220, and the user interface device 56 of the mobile device 50 displaying a textual or graphical representation of the location of the luggage 10 thereon, such as on a map, as in 230. As the transceiver device 54 of the mobile device 50 receives new signals from the transceiver device 32 of the tracking sensor system 30, the identified real-time location of the associated luggage 10 can be updated for displaying on the user interface device 56.

It is to be understood that the transceiver device 54 of the mobile device 50 can communicate with the transceiver device 32 of the tracking sensor system 30 via any system and method as would be known and desired by one of ordinary skill in the art, including, but not limited to, cellular, GPS, Bluetooth, BLE, 3G, LTE, or GPRS based networks. It is also to be understood that the transceiver device 32 of the tracking sensor system 30 can communicate with other transceiver devices and systems as would be known and desired by one of ordinary skill in the art.

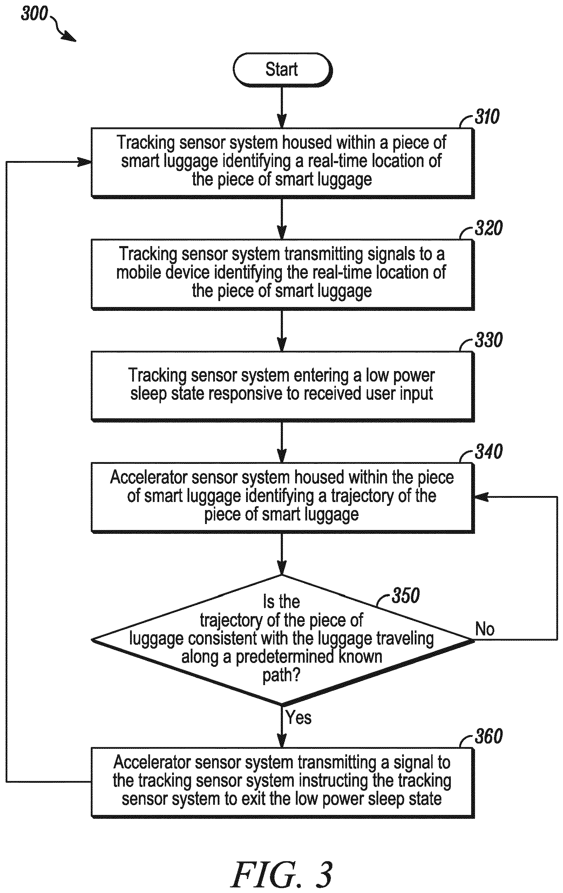

FIG. 3 is a flow diagram of a method 300 in accordance with disclosed embodiments. As seen in FIG. 3, the method 300 can include the sensing device 34, control circuitry 36, programmable processor 36a, and executable control software 36b of the tracking sensor system 30 identifying the real-time location of the associated luggage 10 as in 310 and the transceiver device 32 of the tracking sensor system 30 transmitting one or more signals to the transceiver device 54 of the mobile device 50 indicative of the identified location as in 320. It is to be understood that the sensing device 34, control circuitry 36, programmable processor 36a, and executable control software 36b can identify the real-time location of the associated luggage 10 using any system and method as would be known and desired by one of ordinary skill in the art, including, but not limited to, GPS based systems and methods

When desired, the method 300 can include the tracking sensor system 30 receiving user input, either directly or via a signal received from the transceiver device 54 of the mobile device 50, to turn the tracking sensor system 30 off or to place the tracking sensor system 30 in a low power sleep state as in 330. When the tracking sensor system 30 is off or in the low power sleep state, the sensing device 34, control circuitry 36, programmable processor 36a, and executable control software 36b of the tracking sensor system 30 can refrain from identifying the real-time location of the associated luggage 10 as in 310 and the transceiver device 32 of the tracking sensor system 30 can refrain from transmitting signals to the transceiver device 54 of the mobile device 50 indicative of the identified location as in 320.

The method 300 can also include the accelerometer 44, control circuitry 46, programmable processor 46a, and executable control software 46b of the accelerator sensor system 40 identifying a trajectory of the associated luggage 10 as in 340. For example, in some embodiments, the accelerometer 44 can transmit one or more signals to the control circuitry 46, programmable processor 46a, and executable control software 46a indicative of the movement of the accelerometer 44 in the positive and negative X, Y, and Z coordinate directions. When the accelerometer 44, control circuitry 46, programmable processor 46a, and executable control software 46b of the accelerator sensor system 40 determine that the trajectory of the associated luggage 10 is consistent with the luggage 10 traveling along a path with a predetermined known curved shave, for example, the known shape of a baggage conveyer belt, as in 350, the transceiver device 42 of the accelerator sensor system 40 can transmit a signal to the transceiver device 32 of the tracking sensor system 30 instructing the tracking sensor system 30 to turn on or exit the low power sleep state as in 360. Responsive thereto, the tracking sensor system 30 can turn on or exit the low power sleep state and begin identifying the real-time location of the associated luggage 10 as in 310.

In some embodiments, the accelerometer 44, control circuitry 46, programmable processor 46a, and executable control software 46b of the accelerator sensor system 40 can identify a trajectory of the associated luggage 10 as in 340 and determine that the trajectory of the associated luggage 10 is consistent with the luggage traveling along the path with the predetermined known curve shape as in 350 at predetermined intervals irrespective of the state of the tracking sensor system 30. However, in some embodiments, the accelerometer 44, control circuitry 46, programmable processor 46a, and executable control software 46b of the accelerator sensor system 40 can identify a trajectory of the associated luggage 10 as in 340 and determine that the trajectory of the associated luggage 10 is consistent with the luggage traveling along the path with the predetermined known curved shape as in 350 only when the accelerator sensor system 40 determines that the tracking sensor system 30 is off or in a low power sleep state.

It is to be understood that the transceiver device 42 of the accelerator sensor system 40 can communicate with the transceiver device 32 of the tracking sensor system 30 via any wired or wireless system and method as would be known and desired by one of ordinary skill in the art, including, but not limited to, Bluetooth or BLE based communication.

In some embodiments, the tracking sensor system 30, the accelerator sensor system 40, or another sensor system can identify the occurrence of an unexpected event associated with the luggage 10. For example, in some embodiments, a contact sensor and associated control circuitry can identify when the luggage 10 has been unexpectedly opened, for example, when the contact sensor on a closing edge of the luggage 10 fails to detect contact. Additionally or alternatively, in some embodiments, the accelerometer 44, control circuitry 46, programmable processor 46a, and executable control software 46b of the accelerator sensor system 40 can identify when the associated luggage 10 has been violently vibrated. Additionally or alternatively, in some embodiments, the sensing device 34, control circuitry 36, programmable processor 36a, and executable control software 36b of the tracking sensor system 30 can identify when the associated luggage is farther than a predetermined distance away from the mobile device 50.

When the tracking sensor system 30 or the accelerator sensor system 40 identifies the occurrence of an unexpected event, the transceiver device 32 of the tracking sensor system 30 can transmit one or more signals to the transceiver device 54 of the mobile device 50 indicative of the unexpected event. Responsive to the transceiver device 54 of the mobile device 50 receiving such a signal, the user interface device 56 of the mobile device 50 can display a textual or graphical representation of the unexpected event.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

From the foregoing, it will be observed that numerous variations and modifications may be effected without departing from the scope of the invention. It is to be understood that no limitation with respect to the specific system or method described herein is intended or should be inferred. It is, of course, intended to cover all such modifications as fall within the scope of the invention, as defined by the appended claims.

## Claims

1. A method comprising:
while a tracking sensor system (30) is in a low power sleep state, an accelerator sensor system (40), which is adapted to be coupled to a piece of luggage (10), identifying when the piece of luggage has exited an aircraft by identifying a trajectory of the piece of luggage being consistent with the piece of luggage moving along a path with a predetermined curved shape;
responsive to identifying that the piece of luggage has exited the aircraft, the accelerator sensor system (40) transmitting a first signal to the tracking sensor system (30) associated with the piece ofluggage (10);and
wherein the first signal includes instructions for the tracking sensor system to exit the low power sleep state.

2. The method of claim 1 wherein the predetermined curved shape includes a baggage conveyer belt.

3. The method of claim 1 further comprising:
the tracking sensor system exiting the low power sleep state responsive to receiving the first signal;
the tracking sensor system identifying a real-time location of the piece of luggage responsive to exiting the low power sleep state; and
the tracking sensor system transmitting a signal responsive to identifying the real-time location of the piece of luggage which is indicative of the real-time location of the piece of luggage.

4. The method of claim 1 wherein the accelerator sensor system identifies when the piece of luggage has exited the aircraft and transmits the first signal to the tracking sensor system irrespective of a state of the tracking sensor system.

5. A system comprising:
a transceiver (42);
an accelerometer (44) adapted to be coupled to a piece of luggage (10) ;
a tracking sensor system (30);
a programmable Processor (46a); and
executable control software (46b) stored on a non-transitory computer readable medium,
wherein while the tracking sensor system (30) is in a low power sleep state, the accelerometer, the programmable processor, and the executable control software configured to identify when the piece of luggage has exited an aircraft by identifying when the accelerometer, and thus the piece of luggage, has moved along a path with a predetermined curved shape that is consistent with a curved baggage conveyer belt,
wherein, responsive to the accelerometer (44), the programmable processor (46a), and the executable control software (46b) identifying that the piece of luggage has exited the aircraft, the programmable processor and the executable control software transmit a first signal, via the transceiver, to the tracking sensor system associated with the piece of luggage with instructions for the tracking sensor system to exit the low power sleep state.

6. The system of claim 5 wherein the accelerometer includes a 6-axis accelerometer, and wherein the accelerometer transmits a signal to the programmable processor and the executable control software indicative of movement of the accelerometer in coordinate directions.

7. The system of claim 5 wherein the tracking sensor system exits the low power sleep state responsive to receiving the first signal, wherein the tracking sensor system identifies a real-time location of the piece of luggage responsive to exiting the low power sleep state, wherein the tracking sensor system transmits a signal responsive to identifying the real-time location of the piece of luggage which is indicative of the real-time location of the piece of luggage.

8. The method of claim 1, wherein:
the accelerator sensor system, the tracking sensor system, or another sensor system identifying when an occurrence of an unexpected event different from the piece of luggage exiting the aircraft has occurred; and
responsive to identifying that the occurrence of the unexpected event has occurred, the accelerator sensor system, the tracking sensor system, or the another sensor system transmitting a second signal to a mobile device indicative of the unexpected event.

9. The system of claim 5, wherein:
the accelerometer, the programmable processor, and the executable control software identify when an occurrence of an unexpected event different from the piece of luggage exiting the aircraft has occurred, and
responsive to the accelerometer, the programmable processor, and the executable control software identifying that the occurrence of the unexpected event has occurred, the programmable processor and the executable control software transmit a second signal, via the transceiver, to a mobile device indicative of the unexpected event.

## Patentansprüche

1. Verfahren, das Folgendes umfasst:
während sich ein Nachverfolgungssensorsystem (30) in einem Niedrigenergieruhezustand befindet, Identifizieren durch ein Beschleunigungssensorsystem (40), das ausgelegt ist, mit einem Gepäckstück (10) gekoppelt zu sein, wenn das Gepäckstück ein Flugzeug verlassen hat, durch Identifizieren, dass eine Bewegungsbahn des Gepäckstücks damit übereinstimmt, dass sich das Gepäckstück entlang eines Weges mit einer vorgegebenen, gekrümmten Form bewegt; und
als Antwort auf das Identifizieren, dass das Gepäckstück das Flugzeug verlassen hat, Übertragen eines ersten Signals, das dem Gepäckstück (10) zugeordnet ist, durch das Beschleunigungssensorsystem (40) an das Nachverfolgungssensorsystem (30),
wobei das erste Signal Anweisungen für das Nachverfolgungssensorsystem, den Niedrigenergieruhezustand zu verlassen, enthält.

2. Verfahren nach Anspruch 1, wobei die vorgegebene, gekrümmte Form ein Gepäckförderband enthält.

3. Verfahren nach Anspruch 1, das ferner Folgendes umfasst:
Verlassen des Niedrigenergieruhezustands durch das Nachverfolgungssensorsystem als Antwort auf das Empfangen des ersten Signals;
Identifizieren eines Echtzeitortes des Gepäckstücks durch das Nachverfolgungssensorsystem als Antwort auf das Verlassen des Niedrigenergieruhezustands; und
Übertragen eines Signals, das den Echtzeitort des Gepäckstücks angibt, durch das Nachverfolgungssensorsystem als Antwort auf das Identifizieren des Echtzeitortes des Gepäckstücks.

4. Verfahren nach Anspruch 1, wobei das Beschleunigungssensorsystem identifiziert, wenn das Gepäckstück das Flugzeug verlassen hat und das erste Signal ungeachtet eines Zustands des Nachverfolgungssensorsystems an das Nachverfolgungssensorsystem überträgt.

5. System, das Folgendes umfasst:
eine Sende/Empfangs-Einrichtung (42);
einen Beschleunigungssensor (44), der ausgelegt ist, mit einem Gepäckstück (10) gekoppelt zu sein;
ein Nachverfolgungssensorsystem (30);
einen programmierbaren Prozessor (46a); und
eine ausführbare Steuersoftware (46b), die auf einem nichtflüchtigen, computerlesbaren Medium gespeichert ist,
wobei der Beschleunigungssensor, der programmierbare Prozessor und die ausführbare Steuersoftware konfiguriert sind, dann, wenn sich das Nachverfolgungssensorsystem (30) in einem Niedrigenergieruhezustand befindet, zu identifizieren, wenn das Gepäckstück ein Flugzeug verlassen hat, durch Identifizieren, wenn sich der Beschleunigungssensor und somit das Gepäckstück entlang eines Weges mit einer vorgegebenen, gekrümmten Form bewegt hat, der mit einem gekrümmten Gepäckförderband übereinstimmt,
wobei der programmierbare Prozessor und die ausführbare Steuersoftware als Antwort darauf, dass der Beschleunigungssensor (44), der programmierbare Prozessor (46a) und die ausführbare Steuersoftware (46b) identifizieren, dass das Gepäckstück das Flugzeug verlassen hat, über die Sende/Empfangs-Einrichtung ein erstes Signal mit Anweisungen für das dem Gepäckstück zugeordnete Nachverfolgungssensorsystem, den Niedrigenergieruhezustand zu verlassen, an das Nachverfolgungssensorsystem übertragen.

6. System nach Anspruch 5, wobei der Beschleunigungssensor einen 6-Achsen-Beschleunigungssensor enthält und wobei der Beschleunigungssensor ein Signal an den programmierbaren Prozessor und die ausführbare Software überträgt, das eine Bewegung des Beschleunigungssensors in den Koordinatenrichtungen angibt.

7. System nach Anspruch 5, wobei das Nachverfolgungssensorsystem als Antwort auf das Empfangen des ersten Signals den Niedrigenergieruhezustand verlässt, wobei das Nachverfolgungssensorsystem als Antwort auf das Verlassen des Niedrigenergieruhezustands einen Echtzeitort des Gepäckstücks identifiziert, wobei das Nachverfolgungssensorsystem als Antwort auf das Identifizieren des Echtzeitortes des Gepäckstücks ein Signal überträgt, das den Echtzeitort des Gepäckstücks angibt.

8. Verfahren nach Anspruch 1, wobei:
das Beschleunigungssensorsystem, das Nachverfolgungssensorsystem oder ein weiteres Sensorsystem identifizieren, wenn ein Auftreten eines unerwarteten Ereignisses, das davon abweicht, dass das Gepäckstück das Flugzeug verlässt, aufgetreten ist; und
das Beschleunigungssensorsystem, das Nachverfolgungssensorsystem oder das weitere Sensorsystem als Antwort auf das Identifizieren, dass das Auftreten des unerwarteten Ereignisses aufgetreten ist, ein zweites Signal, das das unerwartete Ereignis angibt, an eine mobile Vorrichtung übertragen.

9. System nach Anspruch 5, wobei:
der Beschleunigungssensor, der programmierbare Prozessor und die ausführbare Steuersoftware identifizieren, wenn ein Auftreten eines unerwarteten Ereignisses, das davon abweicht, dass das Gepäckstück das Flugzeug verlässt, aufgetreten ist, und
der programmierbare Prozessor und die ausführbare Steuersoftware als Antwort darauf, dass der Beschleunigungssensor, der programmierbare Prozessor und die ausführbare Steuersoftware identifizieren, dass das Auftreten des unerwarteten Ereignisses aufgetreten ist, über die Sende/Empfangs-Einrichtung ein zweites Signal, das das unerwartete Ereignis angibt, an eine mobile Vorrichtung übertragen.

## Revendications

1. Procédé, comprenant :
alors qu'un système capteur de suivi à la trace (30) occupe un état de veille à faible consommation d'énergie, l'identification, par un système capteur (40) à accélérateur, adapté à être couplé à un bagage (10), du moment où le bagage est sorti d'un aéronef par identification de la conformité d'une trajectoire du bagage à un mouvement du bagage le long d'un chemin présentant une forme incurvée prédéterminée ;
en réponse à l'identification que le bagage est sorti de l'aéronef, la transmission, par le système capteur (40) à accélérateur, d'un premier signal au système capteur de suivi à la trace (30) associé au bagage (10) ; et
le premier signal comportant des instructions pour que le système capteur de suivi à la trace sorte de l'état de veille à faible consommation d'énergie.

2. Procédé selon la revendication 1, dans lequel le forme incurvée prédéterminée comporte un convoyeur à bande pour bagages.

3. Procédé selon la revendication 1, comprenant en outre :
la sortie, par le système capteur de suivi à la trace, de l'état de veille à faible consommation d'énergie en réponse à la réception du premier signal ;
l'identification, par le système capteur de suivi à la trace, d'une localisation en temps réel du bagage en réponse à la sortie de l'état de veille à faible consommation d'énergie ; et
la transmission, par le système capteur de suivi à la trace, d'un signal, en réponse à l'identification de la localisation en temps réel du bagage, indiquant la localisation en temps réel du bagage.

4. Procédé selon la revendication 1, dans lequel le système capteur à accélérateur identifie le moment où le bagage est sorti de l'aéronef et transmet le premier signal au système capteur de suivi à la trace indépendamment d'un état du système capteur de suivi à la trace.

5. Système, comprenant :
un émetteur-récepteur (42) ;
un accéléromètre (44) adapté à être couplé à un bagage (10) ;
un système capteur de suivi à la trace (30) ;
un processeur programmable (46a) ; et
un logiciel de commande exécutable (46b) enregistré sur un support non transitoire lisible par ordinateur,
alors que le système capteur de suivi à la trace (30) occupe un état de veille à faible consommation d'énergie, l'accéléromètre, le processeur programmable et le logiciel de commande exécutable étant configurés pour identifier le moment où le bagage est sorti d'un aéronef en identifiant le moment où l'accéléromètre, et donc le bagage, a effectué un mouvement le long d'un chemin présentant une forme incurvée prédéterminée qui est conforme à un convoyeur à bande pour bagages incurvé,
en réponse à l'identification, par l'accéléromètre (44), le processeur programmable (46a) et le logiciel de commande exécutable (46b), que le bagage est sorti de l'aéronef, le processeur programmable et le logiciel de commande exécutable transmettant un premier signal, par le biais de l'émetteur-récepteur, au système capteur de suivi à la trace associé au bagage avec des instructions pour que le système capteur de suivi à la trace sorte de l'état de veille à faible consommation d'énergie.

6. Système selon la revendication 5, dans lequel l'accéléromètre comporte un accéléromètre à 6 axes, et dans lequel l'accéléromètre transmet un signal au processeur programmable et au logiciel de commande exécutable, indiquant un mouvement de l'accéléromètre dans des directions de coordonnées.

7. Système selon la revendication 5, dans lequel le système capteur de suivi à la trace sort de l'état de veille à faible consommation d'énergie en réponse à la réception du premier signal, le système capteur de suivi à la trace identifiant une localisation en temps réel du bagage en réponse à la sortie de l'état de veille à faible consommation d'énergie, le système capteur de suivi à la trace transmettant un signal, en réponse à l'identification de la localisation en temps réel du bagage, indiquant la localisation en temps réel du bagage.

8. Procédé selon la revendication 1, dans lequel :
le système capteur à accélérateur, le système capteur de suivi à la trace ou un autre système capteur identifie la survenue d'un événement inattendu différent de la sortie du bagage de l'aéronef ; et
en réponse à l'identification de la survenue de l'événement inattendu, le système capteur à accélérateur, le système capteur de suivi à la trace ou l'autre système capteur transmet un deuxième signal à un dispositif mobile indiquant l'événement inattendu.

9. Système selon la revendication 5, dans lequel :
l'accéléromètre, le processeur programmable et le logiciel de commande exécutable identifient la survenue d'un événement inattendu différent de la sortie du bagage de l'aéronef, et
en réponse à l'identification, par l'accéléromètre, le processeur programmable et le logiciel de commande exécutable, de la survenue de l'événement inattendu, l'accéléromètre, le processeur programmable et le logiciel de commande exécutable transmettent un deuxième signal, par le biais de l'émetteur-récepteur, à un dispositif mobile indiquant l'événement inattendu.
